# EUROPEAN PATENT APPLICATION

(11) **EP 3 101 802 A2**
(43) Date of publication of application: **07.12.2016**
(21) Application number: 16170067.9
(22) Date of filing: 18.05.2016
(51) Int. Cl.: H02P 5/46

(54) **METHOD FOR CONTROLLING MULTIPLE MOTORS**

(30) Priority: 01.06.2015 KR 20150077584
(71) Applicant: LSIS Co., Ltd., Gyeonggi-do 14119 (KR)
(72) Inventor: BAE, Chae-Bong, 14118 Gyeonggi-do (KR)
(74) Representative: Zacco Sweden AB

(57) **Abstract**

There is provided a method for controlling multiple motors to control a plurality of motors connected to a single inverter stably and efficiently. The method includes calculating (S410) operation priorities of each of the plurality of motors on the basis of total cumulative operation time information of the plurality of motors, and controlling to operate (S420) or stop (S430) the plurality of motors on the basis of operation priorities of each of the plurality of motors.

## Description

### TECHNICAL FIELD

The present disclosure relates to a method for controlling multiple motors, and more particularly to a method for controlling multiple motors to control a plurality of motors connected to a single inverter stably and efficiently.

### BACKGROUND

In a system for connecting a plurality of motors to a single inverter and controlling them, for example, a pipeline system, pressure in the pipeline is generally received as feedback for PID operation. In this case, when the pipeline feedback value is below a set point of the pipeline although the operation speed of a main motor in operation is not lower than the speed predetermined by a motor operator, one or more auxiliary motors may be driven for creating a pressure required by the system. In this case, the one or more auxiliary motors are connected to the inverter through relays, etc.

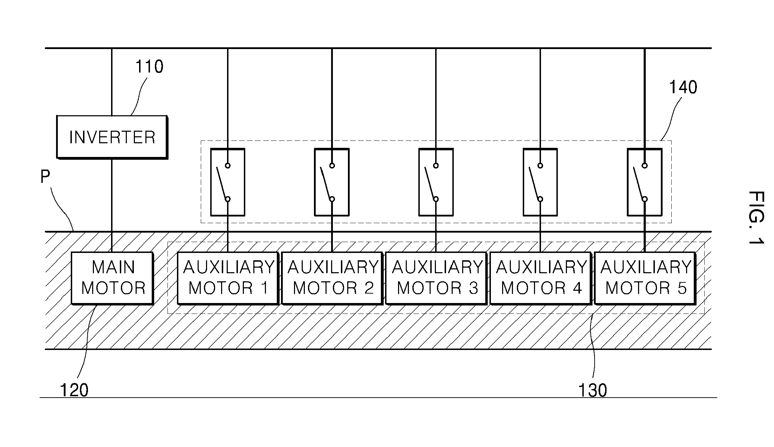

FIG. 1 is an exemplary configuration of a conventional system for controlling multiple motors.

Referring to FIG. 1, the ordinary motor for controlling multiple motors includes a single inverter 110, a main motor 120, a plurality of auxiliary motors 130 and relays 140.

That is, when it is hard to keep the pressure in the pipeline P just by driving the main motor 120, the plurality of auxiliary motors 130 connected through the relays 140 may be driven additionally to keep the pressure in the pipeline at a pressure higher than the set point.

By the way, since such a conventional system for controlling multiple motors does not have an additional algorithm for considering the operation of the auxiliary motors 130, operation is not concentrated on all of the auxiliary motors, but concentrated just on some of the auxiliary motors.

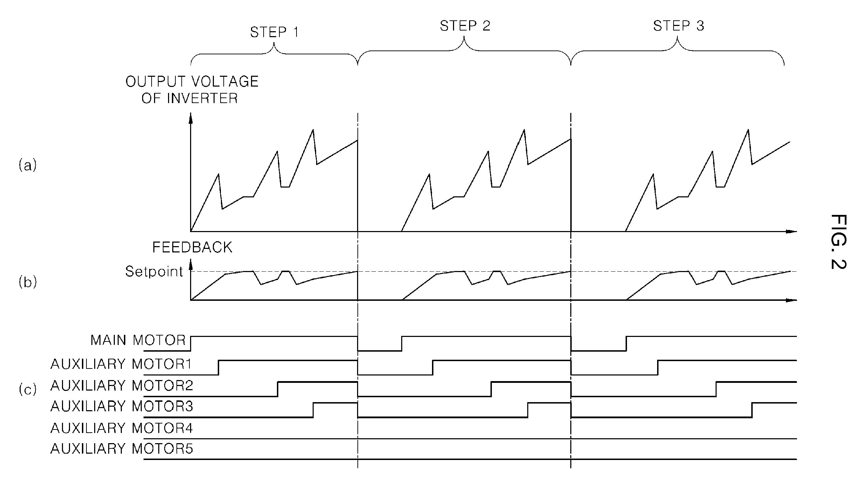

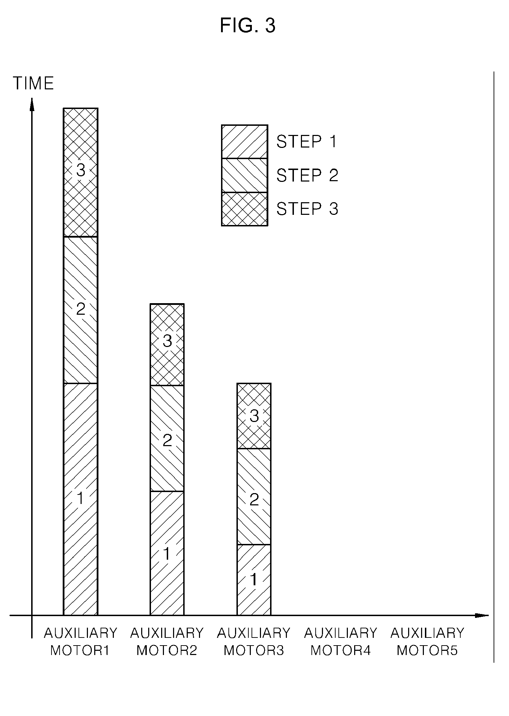

FIG. 2 is a graph for describing the state of prior art motor operation of the system shown in FIG. 1, and FIG. 3 is a graph showing total cumulative operation time of each of the auxiliary motors in FIG. 2.

First, referring to FIG. 2, it is seen that driving auxiliary motors additionally (c) increases gradually to (b) keep the feedback pressure in the pipeline P to be higher than the set point, so that the whole inverter output frequency (a)thus increases. However, since the auxiliary motor 1, the auxiliary motor 2 and the auxiliary motor 3 are operated in sequence equally in <step 2> and <step 3> after they are driven additionally in sequence in <step 1>, too much load is thus concentrated just on the auxiliary motors of higher priorities in consideration of the priorities predetermined in setting up the system.

Even in some cases, most systems may be designed first to stop operation of auxiliary motors of next priorities when decided that additional operation of auxiliary motors are not required any more. That is to say, the aforementioned problem gets further worse by stopping the auxiliary motor 3 followed by the auxiliary motor 2 and then the auxiliary motor 1 in sequence when stopping auxiliary motors after operating the auxiliary motor 1 followed by the auxiliary motor 2 and then the auxiliary motor 3in sequence if additional operation of auxiliary motors is required.

The graph shown in FIG. 3 illustrates the total cumulative operation time of each of the auxiliary motors of FIG. 2.

Referring to FIG. 3, it is seen that the cumulative operation time of all <step 1> to<step 3> shows a significant difference depending on operation priorities predetermined for each of the auxiliary motors because the operation time of auxiliary motors withpriorities in each step is longer. The significant difference in such cumulative operation time contributes to concentrating mechanical stress just on some auxiliary motors to result in inefficient system operation, for example, failure.

### SUMMARY

In view of the above, the present disclosure provides a method for controlling multiple motors to control a plurality of motors connected to a single inverter more stably and efficiently.

The present disclosure is not limited to the above description and other effects and strength of the present disclosure not described above will be understood through the following description, and further apparent in the embodiments of the present disclosure. In addition, it should be noted that the effects and strength of the present disclosure may be realized by the means and their combinations stated in the following claims.

In accordance with an aspect of the present invention, there is provided a method for controlling multiple motors applicable to a multi-motor control system for controlling a plurality of motors through a single inverter. The method includes: priority calculating process to calculate operation priorities of each of the plurality of motors through the use of cumulative operation time information for each of the plurality of motors; and motor controlling process to operate or stop the plurality of motors based on the priorities, which are calculated through the priority calculating process.

In the method, the motor controlling process includes: motor operating process to operate the motor having the highest operation priority from the priorities, which are calculated through the priority calculating process, when additional operation of the motors is requested; and motor stopping process to stop operation of the motor having the lowest operation priority from the priorities, which are calculated through the priority calculating process, when stopping at least one of the motors in operation is requested.

In the method, it is preferable that the operation priorities of each of the plurality of motors, which are calculated through the priority calculating process, are set to be in inverse proportion to total cumulative operation time of the each motor.

In the method, the operation priorities of each of the plurality of motors, which are calculated through priority calculating process, are calculated by the addition of weight information having total cumulative ON/OFF count information or recent operation time information relative to total cumulative operation time information of the each motor.

In addition, the method further includes: when the difference between the total cumulative operation time of one motor with the longest total cumulative operation time among the motors in operation and the total cumulative operation time of the other motor with the shortest cumulative operation time among the motors which is not in operation is greater than a given range of limit, motor changing process to change operation of motors from the one motor to the other motor.

In the method, if the change is made between the one motor and the other motor through the motor changing process, it is preferable that operation of the two motor is carried out simultaneously for a given time period.

As described above, in accordance with the present disclosure, auxiliary motors of which the total cumulative operation time is relatively shorter are always operated first to control a plurality of auxiliary motors connected to a single inverter. By doing this, since the operation time between entire auxiliary motors are balanced, it is thus possible to control multiple motors stably and efficiently.

### BRIEF DESCRIPTION OF THE DRAWINGS

FIG. 1 is an exemplary configuration of a conventional system for controlling multiple motors;
FIG. 2 is a graph for illustrating the state of prior art motor operation of the system shown in FIG. 1;
FIG. 3 is a graph showing total cumulative operation time of each of the auxiliary motors of FIG. 2;
FIG. 4 is a flow chart for illustrating a method for controlling multiple motors in accordance with an embodiment of the present disclosure;
FIG. 5 is a graph for illustrating the state of motor operation in accordance with each embodiment of the present disclosure for the system shown in FIG. 1; and
FIG. 6 is a graph showing total cumulative operation time of each of the auxiliary motors of FIG. 5.

### DETAILED DESCRIPTION

Hereinafter, the effects and strength of the present disclosure will be described in detail with reference to the accompanying drawings, and those skilled in the art of the present disclosure may thus implement the technical effect of the present disclosure easily. It should be noted that specific description about known technology related to the present disclosure is omitted if it may unnecessarily obscure the gist of the present disclosure while describing the present disclosure.

Hereinafter, preferred embodiments of the present disclosure are described in detail with reference to the accompanying drawings. The same reference numerals denote the same or equivalent components in the drawings.

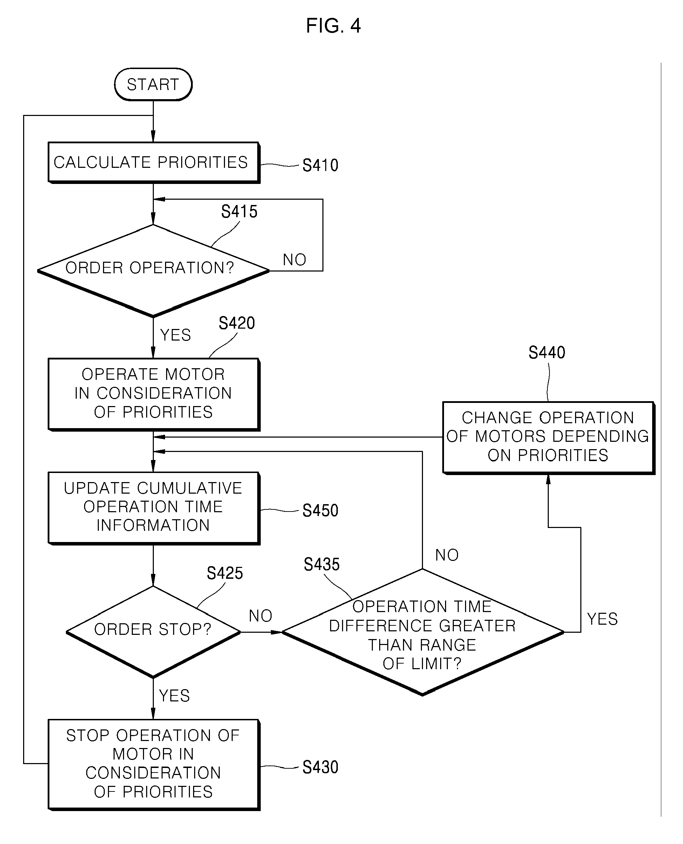

FIG. 4 is a flow chart for illustrating a method for controlling multiple motors in accordance with an embodiment of the present disclosure.

First, the method for controlling multiple motors in accordance with the embodiment of the present disclosure corresponds with a technology applicable to the system for controlling multiple motors described above and shown in FIG. 1. As shown in FIG. 1, the system for controlling multiple motors includes an inverter 110, a main motor 120 connected directly to the inverter 110, and a plurality of auxiliary motors 130 connected selectively to the inverter 110 through each relay 140. The system for controlling multiple motors shown in FIG. 1 operates one of the plurality of auxiliary motors 130 additionally when output thereof is not enough just by the main motor 120.

In other words, the method in accordance with the present disclosure may be usefully applicable to a system for controlling motors which includes the main motor 120 and the plurality of auxiliary motors 130 and drives the plurality of auxiliary motors 130 connected through the relay 140 when the feedback pressure in the pipeline P is not be normally kept just by driving the main motor 120. However, it should be noted that the present disclosure is not limited and applicable just to this configuration.

For further simplified description, the auxiliary motors that may be driven additionally together with the main motor may be called "motors".

Referring to FIG. 4, the method for controlling multiple motors in accordance with an embodiment of the present disclosure includes process S410 for calculating priorities, process S420 for operating motors and process S430 for stopping motor operation. That is, the process S410 for calculating priorities is a process of using total cumulative operation time information for each motor and calculating operation priorities.

First, in the method for controlling multiple motors in accordance with an embodiment of the present disclosure, process S410 for calculating priorities of the method for controlling multiple motors is to calculate operation priorities of each of the plurality of motors, on the basis of the total cumulative operation time information of the plurality of motors. In other words, at process S410, a control unit of the system calculates and manages total cumulative operation time information for each of the plurality of motors, and determines operation priorities of each of the plurality of motors to be in inverse proportion to the calculated cumulative operation time of each motor. That is, in accordance with an embodiment, the operation priorities of each motor are in inverse proportion to the cumulative operation time of each motor.

Subsequently, when operating auxiliary motors additionally is required at process S415, process S420 for operating motors is carried out to operate at least one of the plurality of motors in order of higher operation priorities. In this case, any motor with a higher operation priority, that is, shorter total cumulative operation time among the plurality of motors, is first operated.

In addition, when the plurality of auxiliary motors are currently in operation at process S420, and a request of stopping the operation is received for some motors among the auxiliary motors in operation from the control unit of the system at process S425, stopping operation of at least one motor among the auxiliary motors in operation for stopping the operation in order of lower operation priorities is carried out at process S430. In this case, operation of the motors with lower operation priorities, that is, longer total cumulative operation time, among the motors in operation is stopped.

Furthermore, if the difference between the total cumulative operation time of a first motor currently in operation and the total cumulative operation time of a second motor which is not in operation among the plurality of auxiliary motors is greater than a given range of limit specified for the system at process S435, process S440 for changing operation from the first motor in operation to the second motor which is not in operation may be carried out additionally.

In more detail, when consecutive operation time of the motor currently in operation in consideration of the priorities is very long, the difference in total cumulative operation time between the motor currently in operation and the motor which is not in operation may be greater. If such a difference is greater than a predetermined setpoint, process S440 for changing operation of motors may be automatically carried out for stopping the first motor in operation and operating the second motor which is not in operation instead. To this end, the method for controlling multiple motors in accordance with an embodiment of the present disclosure includes process S450 for updating the cumulative operation time information to identify operation time information of each motor in real time.

In addition, when changing motor operation is carried out at process S440, simultaneous operation of the motors of changed operation may be carried out for a given time period in order to avoid a gap that occurs when no motor operates.

That is, if stopping the operation of the first motor is carried out simultaneously with starting to operate the second motor for changing operation from the first motor to the second motor, a gap may occur when no motor operates for a given time period until output from the other motor reaches a normal level. In order to avoid this gap to occur, the first motor may be stopped after the output of the second motor reaches the normal level. In addition, in consideration of operation features of the motors provided in the system, simultaneous operation may be carried out for a given time period among the motors of changed operation. In this case, it should be noted that the configuration is made to allow operators to change the time predetermined for simultaneous operation of the motors. However, it should also be noted that the present disclosure is not limited to the configuration.

Describing it in other words, when changing operation from the first motor with the longest total cumulative operation time among the motors in operation to the second motor which is not in operation with the shortest total cumulative operation time at process S440, both the first motor and the second motor are simultaneously operated for a given time period to enable the output of the second motor to reach a normal level. After that, when the output of the second motor reaches the normal level, the first motor is stopped and the second motor is just operated.

Therefore, with the method for controlling multiple motors in accordance with an embodiment of the present disclosure described above, it is possible to operate the plurality of motors alternately and seamlessly in consideration of total cumulative operation time information of each motor. As a result, the issue of too much concentration on some motors in prior art is resolved, and another effect is that the system for operating multiple motors may thus be operated more stably and efficiently.

As described above, total cumulative operation time information about the motors in operation may be updated and saved in real time at process S450 in this case.

Meanwhile, at process S410 for calculating priorities in the method for controlling multiple motors in accordance with another embodiment of the present disclosure, calculating the operation priorities of each of the plurality of motors may be further based on at least one of total cumulative ON/OFF count information and recent operation time information of the plurality of motors in addition to the total cumulative operation time information of each motor.

In short, in accordance with an embodiment of FIG. 4, operation priorities of each motor are calculated by using just the total cumulative operation time of each motor.

Unlike this, in accordance with another embodiment of the present disclosure, weights are calculated by using total cumulative ON/OFF count information or recent operation time information of each motor to apply them to calculating operation priorities of the motors. As a result, it is possible to calculate more accurate and practical priorities. In this case, the recent operation time information refers to the operation time information about a concerned motor which has been operated for hours to days before the current time. The time range in the recent operation time information may be configured to be predetermined or changed by users including operators. For example, the recent operation time information may mean operation time information about the concerned motor of concentrated operation, carried out commonly for 24 to 48 hours before the current time.

However, it should be noted that the information applicable to calculating weights in accordance with the embodiment of the present disclosure is not limited just to total cumulative ON/OFF count information or recent concentrated operation time information, and it will be apparent to those skilled in the art that operators may determine weight configuration factors and their ratios in consideration of actually implemented system environment and the like.

It should be noted that, in the method for controlling multiple motors in accordance with an embodiment and another embodiment of the present disclosure, any common techniques may be applied to addressing the case that the same priorities are calculated for two or more motors.

However, in an embodiment of the present disclosure for calculating priorities just with the total cumulative operation time information of motors, the total cumulative ON/OFF count information or the recent cumulative concentrated operation time information described above may be applied to addressing the issue of same priorities.

In addition, in another embodiment of the present disclosure for calculating priorities by applying various weights, the same priorities may be resolved by means of the technique for putting more weights on the total cumulative operation time information.

However, it should be noted that the present disclosure is not limited just to the above description, and any common techniques may be applied to resolving the issue that the same priorities are calculated for two or more motors as described above.

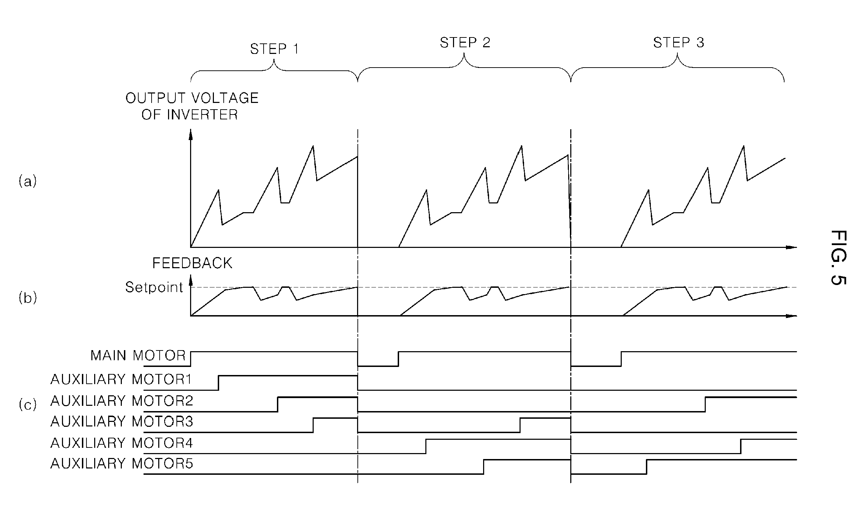

FIG. 5 is a graph for illustrating the state of motor operation in accordance with each embodiment of the present disclosure for the system shown in FIG. 1.

Referring to FIG. 5, it is seen that additional driving of auxiliary motors gradually (c) increases to (b) keep the feedback pressure in the pipeline P at a value the same as or higher than the set point, and the whole output frequency of the inverter thus (a) increases.

As shown in FIG. 2, in accordance with prior art, motors are always operated one by one from the auxiliary motor 1 in all steps.

On the contrary, in accordance with an embodiment and another embodiment of the present disclosure as shown in FIG. 5, on the assumption that the auxiliary motor 1, the auxiliary motor 2 and the auxiliary motor 3 are operated additionally in sequence in <step 1>, the auxiliary motor 4, the auxiliary motor 5 and the auxiliary motor 3 are operated additionally, in <step 2>, in sequence in consideration of the priorities calculated by using the cumulative operation time information of <step 1>. In addition, the auxiliary motor 5, the auxiliary motor 2 and the auxiliary motor 4 are operated additionally in sequence in <step 3>in consideration of the priorities determined by using the motor operation information (total cumulative operation time information, etc.) in <step 1> and <step 2>.

That is, when applying each embodiment of the present disclosure, it is seen that the situation of too much concentration of load on some motors does not occur, unlike conventional multi-motor control techniques. This implements the system to be kept and operated stably and efficiently.

For a reference, FIG. 1 is a configuration with one main motor 120 and five auxiliary motors 130 and five relays 140 connected to each auxiliary motor in the pipeline P, but it should be noted that this is an exemplary configuration of the system for describing embodiments of the present disclosure, and the present disclosure is not limited just to systems with such a configuration.

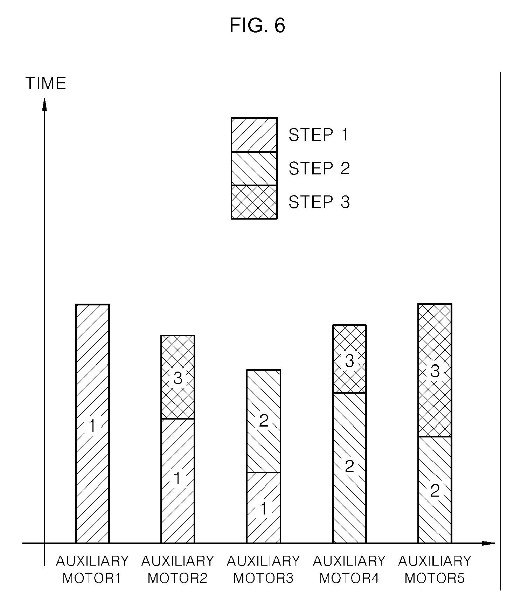

FIG. 6 is a graph showing total cumulative operation time of each of auxiliary motors of FIG. 5.

Referring to FIG. 6, it is seen that five auxiliary motors represent somewhat uniform total cumulative operation time. In FIG. 6, the auxiliary motor 3 with the shortest total cumulative operation time currently is given the highest priority. Therefore, it is seen that if operation of auxiliary motors is requested in the next step, additional operation is carried out in order of the auxiliary motor 3, the auxiliary motor 2 and the auxiliary motor 4.

However, calculating priorities applied to the method for controlling multiple motors in accordance with each embodiment of the present disclosure is not determined just in consideration of the total cumulative operation time information of motors. As described above, different weights may be added, with various configuration factors and ratios determined by operators in consideration of actually implemented environment of the system provided with motors.

Furthermore, as described above, when two or more motors have the same operation priorities, the system is configured to identify priorities in detail among motors with the same operation priorities through the technique for giving weights to the total cumulative ON/OFF count information, recent concentrated operation time information or total cumulative operation time information of the motors.

Meanwhile, in accordance with still another embodiment of the present disclosure, the operation priorities of each of the plurality of auxiliary motors are calculated on the basis of the order of shorter total cumulative operation time, the order of smaller total ON/OFF switch counts and the order of shorter recent operation time. In addition, when the pressure in the pipeline is not enough just with the output from the main motor, at least one of the plurality of auxiliary motors is driven in sequence in order of higher operation priorities. After that, when a request of stopping operation is received, at least one of the auxiliary motors in operation is stopped in sequence in order of lower operation priorities. As described above, since the plurality of auxiliary motors are driven for longer time in order of less operation time thereof, the similar level of operation times of each of auxiliary motors may be implemented each other. As a result, since the plurality of auxiliary motors may have similar performance each other, controlling the system by using the plurality of auxiliary motors may be further facilitated and managing the plurality of auxiliary motors may be further facilitated.

In accordance with the method for controlling multiple motors in accordance with each embodiment of the present disclosure described above, auxiliary motors with relatively higher priorities calculated by using total cumulative operation time information are first operated to control a plurality of auxiliary motors connected selectively to an inverter through relays or switches unlike the main motor connected directly to the inverter. As a result, operation time may be kept uniform among entire auxiliary motors. Therefore, repeated failure of conventional motors that happens due to load concentrated just on some motors may be resolved, and a multi-motor control system may be further controlled stably and efficiently.

The present disclosure described above is not limited to the aforementioned embodiments and accompanying drawings. It will be understood by those skilled in the art of the present disclosure that various substitutions, changes and modifications may be made without departing from the technical scope of the present disclosure as defined in the following claims.

## Claims

1. A method for controlling multiple motors applicable to a multi-motor control system for controlling a plurality of motors (130) through a single inverter (110), the method comprising:
priority calculating process to calculate operation priorities of each of the plurality of motors on the basis of total cumulative operation time information of the plurality of motors; and
motor controlling process to operate or stop the plurality of motors on the basis of operation priorities of each of the plurality of motors.

2. The method of claim 1, wherein said motor controlling process comprises:
motor operating process to operate at least one of the plurality of motors in order of higher operation priorities of the motors when additional operation of the motors is requested; and
motor stopping process to stop operation of at least one of the motors in operation in order of lower operation priorities of the motors when stopping at least one of the motors in operation is requested.

3. The method of claim 1 or claim 2, wherein the operation priorities of each of the plurality of motors are in inverse proportion to total cumulative operation time of the each motor.

4. The method of any one of claim 1 to claim 3, further comprising:
motor changing process to change operation from a first motor in operation to a second motor which is not in operation when a difference between the total cumulative operation time of the first motor with the longest total cumulative operation time among the motors in operation and the total cumulative operation time of the second motor with the shortest cumulative operation time among the motors which is not in operation is greater than a given range of limit.

5. The method of claim 4, wherein, in said motor changing process, operation of the first motor is stopped after operating both the first and the second motors simultaneously for a predetermined time period.

6. The method of any one of claim 1 to claim 3, wherein the operation priorities of each of the plurality of motors are calculated further on the basis of at least one of total cumulative ON/OFF count information and recent operation time information of the plurality of motors.

7. The method of claim 6, further comprising:
motor changing process to change operation of motors from the first motor in operation to the second motor which is not in operation when the difference between the total cumulative operation time of the first motor with the longest total cumulative operation time among the motors in operation and the total cumulative operation time of the second motor with the shortest cumulative operation time among the motors which is not in operation is greater than a given range of limit.

8. The method of claim 7, wherein, in said motor changing process, operation of the first motor is stopped after operating both the first and the second motors simultaneously for a given time period.
